# EUROPEAN PATENT APPLICATION

(11) **EP 2 778 874 A2**
(43) Date of publication of application: **17.09.2014**
(21) Application number: 14159117.2
(22) Date of filing: 12.03.2014
(51) Int. Cl.: G06F 3/0484, G09G 5/39

(54) **Area selection processing apparatus and method for media editing and computer readable recording medium**

(30) Priority: 14.03.2013 KR 20130027561
(71) Applicant: Samsung Electronics Co., Ltd., Suwon-si Gyeonggi-do 443-742 (KR)
(72) Inventor: Bae, Soo-Jung, 443-742 Gyeonggi-do (KR); Han, Jong-Hyun, 443-742 Gyeonggi-do (KR)
(74) Representative: Jenkins, Richard Gavin

(57) **Abstract**

An area selection processing apparatus for displaying a selected area and an unselected area of an image are provided. The apparatus includes a first image buffer that temporarily stores a target image currently being displayed, an image convertor that converts the target image through an image conversion method, a second image buffer that temporarily stores the target image converted through the image convertor, an area selection determining unit that determines whether an area is selected for the target image, and an area selection processor that processes the target images such that the corresponding selected area of the target image stored in the first image buffer is displayed for the selected area, and the corresponding unselected area of the converted image stored in the second image buffer is displayed for the unselected area, when the area selection determining unit determines that the specific area is selected.

## Description

### Technical Field

The present disclosure relates to an area selection processing appar atus for media editing. More particularly, the present disclosure relates to an app aratus and a method for processing an area selection for media editing which dis play a selected area visually differentiated from an unselected area during editin g of the media, and a computer readable medium.

### Background

In recent years, as a performance of personal computers has advan ced, and various application programs have been developed, users are able to edi t images simply by using the personal computers. In addition, as a performance o f smart phones similarly continues to advance, the smart phones also provide fun ctions through which users can simply edit images photographed through the sm art phones.

When editing media, such as an image or a video, a case may occu r in which a user desires to select a specific area of the entire image. However, a ccording to the related art, since a selected area is differentiated only through a b oundary line when the specific area is selected, in a case where a color of the im age is similar to that of the boundary line, the selected area is not clearly differen tiated from an unselected area.

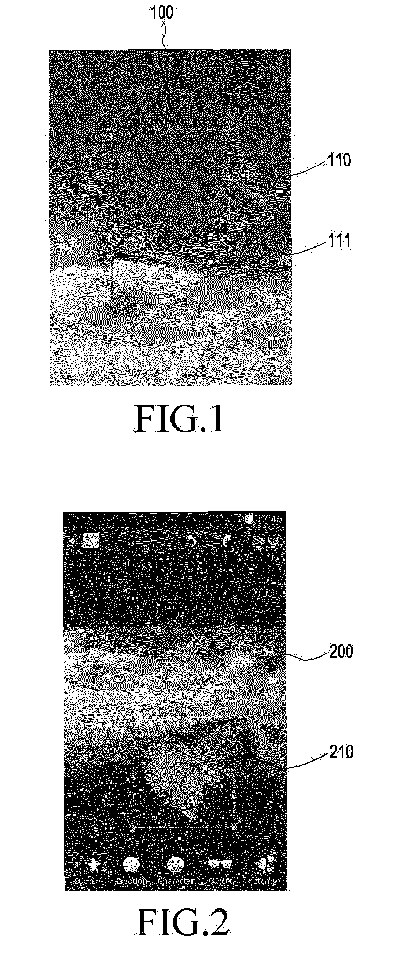

FIG. 1 shows a method of differentiating a selected area according to the related art.

Referring to FIG. 1, when a specific area is selected in an editing t arget image 100, a selected area 110 may be differentiated thorough a boundary l ine 111, and in a case where a color of the boundary line 111 is similar to that of an area adjacent to the boundary line 111 in the target image, the boundary line 1 11 is not clearly distinguished.

FIG. 2 shows a method of displaying an insert image according to t he related art.

Referring to FIG. 2, when a target image 200 occupies one area of the whole display area, an insert image 210 (e. g., an image clip, or an icon) may depart from an area of the target image 200. In this case, since a portion of the i nsert image 210 may be cut away, it is difficult for users to perform desired editi ng and to effectively adjust a location of the insert image 210.

Accordingly, there is a need for an improved apparatus and metho d for selecting an area for media editing in which, when a specific area is selecte d in a selection mode, an unselected area of the image is converted, whereby the selected area and the unselected area are clearly differentiated from each other.

The above information is presented as background information onl y to assist with an understanding of the present disclosure. No determination has been made, and no assertion is made, as to whether any of the above might be ap plicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a n apparatus and a method for processing area selection for media editing in whic h during editing of the media, when a specific area is selected in a state where a selection mode is entered, an unselected area is image converted, whereby the se lected area and the unselected area are clearly differentiated from each other, and a computer readable medium.

Another aspect of the present disclosure is to provide an apparatus and a method for processing area selection for media editing in which, when an i nsert image is arranged in a target image, in a case where at least one area of the insert image departs from the target image, the corresponding area which departs from the target image is image filtered, whereby users can easily perform the im age editing, and a computer readable medium.

The above-described aspects of the present disclosure and special e ffects of the present disclsure which will be described can be achieved by config urations which will be described below.

In accordance with an aspect of the present disclosure, an area sele ction processing apparatus for media editing which displays a selected area and a n unselected area of an image is provided. The area selection processing apparat us for media editing includes a first image buffer configured to temporarily store a target image currently being displayed, an image convertor configured to conv ert the target image through an image conversion method, a second image buffer configured to temporarily store the target image converted through the image co nvertor, an area selection determining unit configured to determine whether an a rea is selected for the target image, and an area selection processor configured to process the target images such that the corresponding selected area of the target image stored in the first image buffer is displayed for the selected area, and the c orresponding unselected area of the converted image stored in the second image buffer is displayed for the unselected area, when the area selection determining u nit determines that the specific area is selected.

The image convertor may perform image filtering of the target ima ge.

The image filtering may include any one selected from Blur, Embo ssing, Jitter, Sepia, Gray scale, and Invert.

The area selection processing unit may superpose the target image stored in the first image buffer on the converted target image stored in the secon d image buffer, and when the area selection determining unit determines that the specific area is selected, remove the unselected area among the whole area of the target image such that the corresponding area of the converted target image is di splayed in the unselected area.

The area selection processing unit may superpose the converted tar get image stored in the second image buffer on the target image stored in the firs t image buffer, and when the area selection determining unit determines that the specific area is selected, remove an area corresponding to the selected area amon g the whole area of the converted target image such that the corresponding area of the converted target image is displayed in the unselected area.

In accordance with another aspect of the present disclosure, an ima ge display processing apparatus for displaying an insert image added to a target i mage is provided. The image display processing apparatus includes a first image buffer configured to temporarily store the added insert image, an image converto r configured to convert the insert image through an image conversion method, a second image buffer configured to temporarily store the insert image converted t hrough the image convertor, an insert image area determining unit configured to determine whether at least one area of the insert image departs from the whole ar ea of the target image according to a location change of the insert image, and an insert image display processor configured to process the insert images such that t he corresponding area of the insert image stored in the first image buffer is displ ayed for an area included in the target image among the whole area of the insert i mage, and the corresponding area of the converted insert image stored in the sec ond image buffer is displayed for an area departing from the target image among the whole area of the insert image, when it is determined that at least one area of the whole area of the insert image departs from an area of the original target ima ge according to the determination result of the insert image area determining unit

In accordance with another aspect of the present disclosure, an are a selection processing method for media editing which displays a selected area a nd an unselected area of an image is provided. The area selection processing met hod for media editing includes temporarily storing a target image currently being displayed in a first image buffer, converting the target image through an image c onversion method, temporarily storing the converted target image in a second im age buffer, determining whether an area is selected for the target image, and proc essing the target image such that the corresponding selected area of the target im age stored in the first image buffer is displayed for the selected area, and the corr esponding unselected area of the converted image stored in the second image buf fer is displayed for the unselected area, when it is determined that the specific ar ea is selected.

In accordance with another aspect of the present disclosure, an ima ge display processing method for displaying an insert image added to a target im age is provided. The image display processing method includes temporarily stori ng the added insert image in a first image buffer, converting the insert image thr ough an image conversion method, temporarily storing the insert image converte d through the image convertor in a second image buffer, determining whether at least one area of the insert image departs from the whole area of the target image according to a location change of the insert image, and processing the insert ima ge such that the corresponding area of the insert image stored in the first image b uffer is displayed for an area included in the target image among the whole area of the insert image, and the corresponding area of the converted insert image stor ed in the second image buffer is displayed for an area departing from the target i mage among the whole area of the insert image, when it is determined that at lea st one area of the whole area of the insert image departs from an area of the origi nal target image according to the determination result.

Other aspects, advantages, and salient features of the disclosure wi 11 become apparent to those skilled in the art from the following detailed descript ion, which, taken in conjunction with the annexed drawings, discloses various e mbodiments of the present disclosure.

### BRIEF DESCRIPTION OF THE DRAWINGS

The above and other aspects, features, and advantages of certain e mbodiments of the present disclosure will be more apparent from the following description taken in conjunction with the accompanying drawings, in which:
FIG. 1 shows a method of differentiating a selected area according to the related art;
FIG. 2 shows a method of displaying an insert image according to t he related art;
FIG. 3 is a diagram showing a concept of differentiating between a selected area and an unselected area according to a first embodiment of the pres ent disclosure;
FIG. 4 is a block diagram showing a structure of an area selection processing apparatus for media editing according to the first embodiment of the present disclosure;
FIG. 5 is a flowchart showing a procedure of processing area select ion for media editing according to the first embodiment of the present disclosure ;
FIG. 6 is a diagram showing a method for displaying an insert ima ge according to a second embodiment of the present disclosure;
FIG. 7 is a block diagram showing a structure of an area selection processing apparatus for media editing according to the second embodiment of t he present disclosure;
FIG. 8 is a flowchart showing a procedure of processing area select ion for media editing according to the second embodiment of the present disclos ure;
FIG. 9 shows an area selection result according to the first embodi ment of the present disclosure;
FIG. 10 shows an insert image display result according to the seco nd embodiment of the present disclosure; and
FIG. 11 shows a result where the present disclosure is applied to a moving image trim function according to an embodiment of the present disclosure .

Throughout the drawings, it should be noted that like reference nu mbers are used to depict the same or similar elements, features, and structures.

### DETAILED DESCRIPTION

The following description with reference to the accompanying dra wings is provided to assist in a comprehensive understanding of various embodi ments of the present disclosure as defined by the claims and their equivalents. It includes various specific details to assist in that understanding but these are to be regarded as merely exemplary. Accordingly, those of ordinary skill in the art wil l recognize that various changes and modifications of the various embodiments d escribed herein can be made without departing from the scope and spirit of the p resent disclosure.

The terms and words used in the following description and claims are not limited to the bibliographical meanings, but, are merely used by the inve ntor to enable a clear and consistent understanding of the present disclosure. Acc ordingly, it should be apparent to those skilled in the art that the following descri ption of various embodiments of the present disclosure is provided for illustratio n purpose only and not for the purpose of limiting the present disclosure as defin ed by the appended claims and their equivalents.

It is to be understood that the singular forms "a," "an," and "the" i nclude plural referents unless the context clearly dictates otherwise. Thus, for ex ample, reference to "a component surface" includes reference to one or more of s uch surfaces.

The following description discloses an apparatus and a method for processing area selection for media editing which allow a selected area and an u nselected area to be displayed in a state of being visually differentiated from eac h other during editing of the media such as images or videos.

To this end, in the present disclosure, when a specific area is select ed in an editing target image, an area which is not selected (e. g., an area except f or the selected area in the whole area of the target image) (hereinafter, referred t o as 'an unselected area') is image converted and displayed, whereby a differenti ation between the selected area and the unselected area can be clearly made. Mea nwhile, various image filtering techniques are applied to the present disclosure a s an image conversion for the unselected area. In this way, the differentiation bet ween the areas can be made clear irrespective of colors or types of target image.

Hereinafter, various embodiments of the present disclosure will be described with reference to the accompanying drawings in order that those skille d in the art to which the present disclosure pertains may readily carry out the pre sent disclosure.

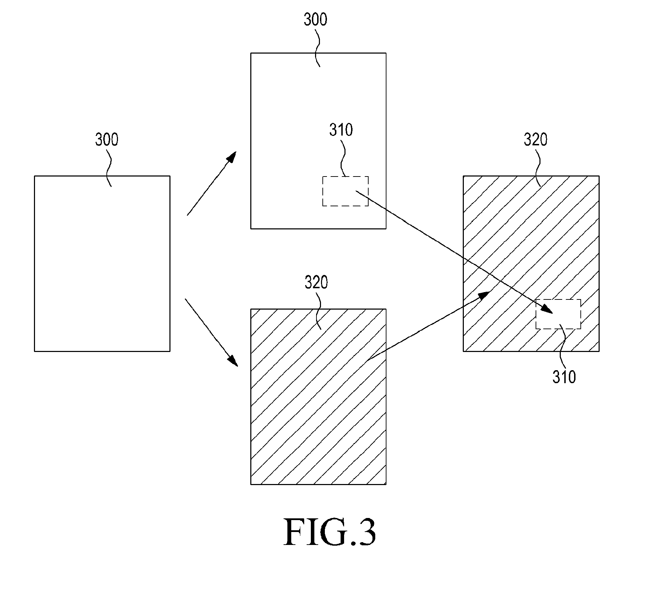

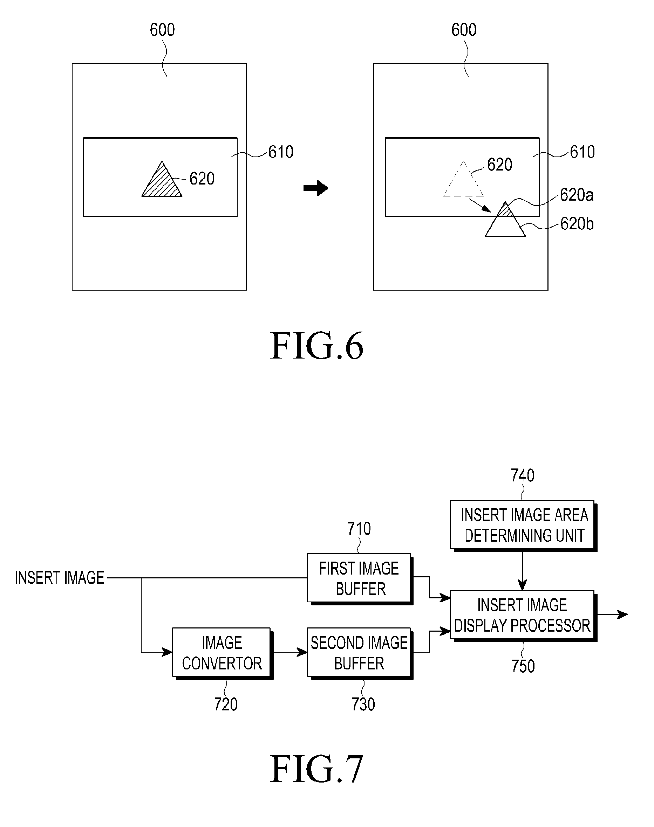

First, an apparatus and a method according to a first embodiment o f the present disclosure will be described with reference to FIGs. 3 through 5, an d then an apparatus and a method according to a second embodiment of the pres ent disclosure will be described with reference to FIGs. 6 through 8.

### First embodiment - Differentiation between a selected area and an unselected area

FIG. 3 is a diagram showing a concept of differentiating between a selected area and an unselected area according to a first embodiment of the pres ent disclosure.

Referring to FIG. 3, according to the first embodiment of the prese nt disclosure, the whole area of an original target image 300 is image converted, and thus a converted image 320 is generated. At this time, when a specific area o f the original target image 300 is selected through an input means (e. g., a hand o r a pen, in a case of a terminal provided with a touch screen), the corresponding area of the original target image 300 is displayed for a selected area 310, and the corresponding area of the converted image 320 is displayed for the remaining ar ea (e. g., an unselected area 320) except for the selected area 310.

During selection of the area, a method in which the unselected area 320 is displayed through the converted image as described above may be variou sly realized.

For example, when a selection mode is entered in an image editing program, the original target image 300 is image converted (e. g., image filtered), and the converted image 320 (e. g., the filtered image) is temporarily stored in a buffer. At this time, the original target image 300 is superposed on the converted image 320 in a layer form. Accordingly, before a specific area is selected, only t he original target image 300 which corresponds to an upper positioned layer is di splayed. When a specific area is selected by a user in the original target image 3 00, the unselected area 320 is removed in the upper positioned original target im age 300 with the corresponding selected area 310 remaining. Thus, the correspon ding area of the original target image 300 is displayed in the selected area 310, a nd since the original target image 300 which corresponds to the upper positioned layer is removed, the corresponding area of the converted image 320 which corr esponds to a lower positioned layer is displayed in the remaining unselected area 320. In this way, during the selection of the specific area, the filtered image is di splayed in the unselected area 320, whereby the user can clearly differentiate bet ween the selected area 310 and the unselected area 320.

On the other hand, in a method according to another embodiment o f the present disclosure, the converted image 320 is superposed on the original ta rget image 300, whereby displaying an unselected area 320 through the converte d image may also be realized. That is, the converted image 320 is superposed an d displayed on the original target image 300, and when a specific area is selected , the selected area 310 of the converted image 320 which corresponds to an uppe r positioned layer is removed. Thus, the original target image 300 which corresp onds to a lower positioned layer is displayed in the selected area 310, and the co nverted image 320 which corresponds to the upper positioned layer is displayed i n the unselected area 320.

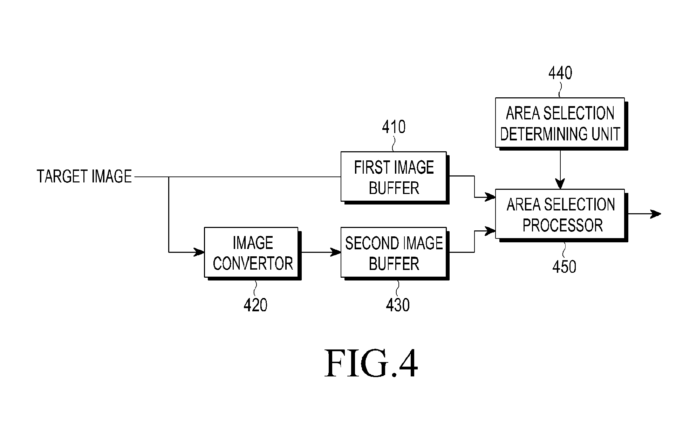

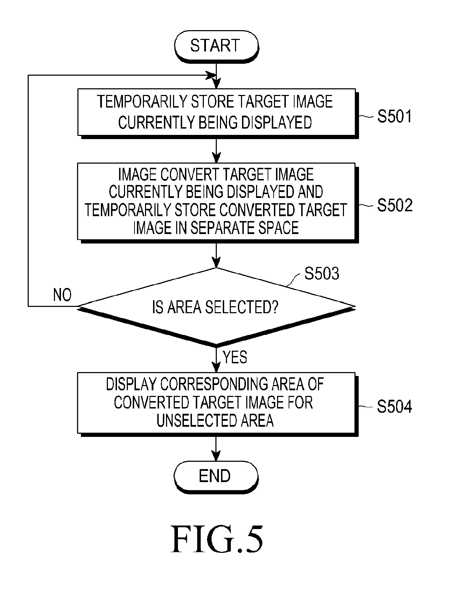

Hereinafter, an apparatus and a method according to the first embo diment of the present disclosure will be described with reference to FIGs. 4 and 5.

FIG. 4 is a block diagram showing a structure of an area selection processing apparatus for media editing according to a first embodiment of the pr esent disclosure.

Referring to FIG. 4, the apparatus according to the first embodime nt of the present disclosure may include a first image buffer 410, an image conve rtor 420, a second image buffer 430, an area selection determining unit 440, and an area selection processor 450.

During editing of an image in an image editing program, when an area selection mode is entered, an editing target image is temporarily stored in th e first image buffer 410. Moreover, according to the first embodiment of the pres ent disclosure, the editing target image is image converted in the image converto r 420 to be temporarily stored in the second image buffer 430.

The image convertor 420 processes the editing target image throug h various image converting methods, and filters the image according to the first embodiment of the present disclosure. Various methods may be applied to the im age filtering. For example, image filtering methods such as Blur, Embossing, Jitt er, Sepia, Gray scale, Invert, and the like may be applied. Of course, the present disclosure is not limited thereto.

The area selection determining unit 440 determines area selection according to an input from a user. The method of the area selection may be vario usly realized according to a type of terminal and a type of input means. For exa mple, when a touch screen is installed in the terminal as described above, a speci fic area may be selected through a touch by a hand or a pen.

The area selection processor 450 is provided with area information on the selected area according to the area selection determination of the area sel ection determining unit 440, and processes the images such that the selected area is differentiated from an unselected area. That is, according to the first embodim ent of the present disclosure, the area selection processor 450 processes the imag es such that the corresponding area of an original target image stored in the first i mage buffer 410 is displayed for the selected area, and the corresponding area of the converted image stored in the second image buffer 430 is displayed for the u nselected area. In this way, when the specific area is selected, the selected area a nd the unselected area may be clearly differentiated from each other when displa yed.

At this time, the method, in which the area selection processor 450 processes the images such that the selected area and the unselected area are diffe rentiated from each other when displayed, may be variously realized, and as desc ribed above, as the editing target image stored in the first image buffer 410, and t he converted image stored in the second image buffer 430 overlap each other, an d the selected area or the unselected area is removed, may be realized.

Although the elements of the apparatus are separately shown in the drawing in order to illustrate that they may be functionally and logically separat ed, it does not necessarily mean that the elements are physically separated, or are realized through separate codes.

In the present description, each function unit (or each module) may refer to a functional and structural combination between hardware for performin g the spirit of the present disclosure and software for driving the hardware. For e xample, it can be easily deduced by one of average skill in the art to which the pr esent disclosure pertains that each function unit may refer to a logical unit of a c ode and a hardware resource for executing the code, and may not necessarily ref er to a physically connected code, or one type of hardware.

FIG. 5 is a flowchart showing a procedure of processing area select ion for media editing according to the first embodiment of the present disclosure.

Referring to FIG. 5, when an area selection mode is entered during editing of an image in an image editing program, an editing target image, which is currently being displayed on a screen, is temporarily stored in a memory, for e xample the first image buffer 410, at operation S501. Thereafter, the target imag e which is currently being displayed is image converted to be temporarily stored in a separate space (e. g., the second image buffer 430) at operation S502.

When it is determined that a specific area is selected through an in put by a user in the target image at operation S503, the corresponding area of the converted target image is displayed for an area which is not selected (e. g., an u nselected area) at operation S504. In this way, during the selection of the area, th e selected area and the unselected area may be clearly distinguished from each ot her.

The above-described area selection processing method for media e diting according to the various embodiments of the present disclosure may be re alized in the form of a program command capable of being performed through v arious computer means to be recorded in a computer readable medium. The com puter readable medium may include any one or all combinations of a program co mmand, a data file, and a data structure. The program command recorded in the medium may correspond to what is specially designed and configured for the pre sent disclosure, or what is well known to the those skilled in the computer softw are fields to be used. The computer readable medium includes magnetic media s uch as a hard disk, a floppy disk, and a magnetic tape, optical media such as a C D-ROM, and a DVD, magneto-optical media such as a floptical disk, and a hard ware device such as a ROM, a RAM, and a flash memory, specially configured t o store and perform the program command. The program command includes a hi gh level language code capable of being executed in computers by using an inter preter as well as a machine language code produced by a compiler. The above-d escribed hardware device may be configured to operate as one or more software modules in order to perform an operation of the present disclosure, and vice vers a.

### Second embodiment - Display of an insert image departing from an area

FIG. 6 is a diagram showing a method for displaying an insert ima ge according to a second embodiment of the present disclosure.

Referring to FIG. 6, when an editing target image 610 occupies on e area of the whole display area 600, an insert image 620 (e. g., a sticker image) may depart from an area of the editing target image 610.

That is, as shown on a right side of FIG. 6, when the insert image 6 20 is moved to a lower right side of the editing target image 610, a situation in w hich a lower area of the insert image 620 departs from the editing target image 6 10 may occur.

At this time, according to the second embodiment of the present di sclosure, an original insert image may be displayed as it is in an area 620a (e. g., an upper area of the insert image 620 in FIG. 6) included in the editing target im age 610 among the whole area of the insert image 620, and a converted image (e. g., a filtered image) may be displayed in an area 620b (e. g., a lower area of the insert image 620 in FIG. 6) departing from the editing target image 610 among t he whole area of the insert image 620. In this way, a determination may be clearl y made as to whether the insert image 620 departs from the area of the editing ta rget image 610.

Hereinafter, an apparatus and a method according to the second em bodiment of the present disclosure will be described with reference to FIGs. 7 an d 8.

FIG. 7 is a block diagram showing a structure of an area selection processing apparatus for media editing according to the second embodiment of t he present disclosure.

Referring to FIG. 7, the apparatus according to the second embodi ment of the present disclosure may include a first image buffer 710, an image co nvertor 720, a second image buffer 730, an insert image area determining unit 74 0, and an insert image display processor 750.

During editing of an image in an image editing program, when an i nsert image is selected and added to an original target image, the added insert im age is temporarily stored in the first image buffer 710. Moreover, according to th e second embodiment of the present disclosure, the insert image is image convert ed in the image convertor 720 to be temporarily stored in the second image buffe r 730.

At this time, the image convertor 720 processes the insert image th rough various image converting methods, and filters the image according to the s econd embodiment of the present disclosure. Various methods may be applied to the image filtering. For example, image filtering methods such as Blur, Embossi ng, Jitter, Sepia, Gray scale, and Invert may be applied, but the present disclosur e is not limited thereto.

The insert image area determining unit 740 determines whether the insert image departs from an area of the original target image according to a loc ation change of the insert image by a user.

When at least one area of the whole area of the insert image depart s from the area of the original target image according to the determination result of the insert image area determining unit 740, the insert image display processor 750 processes the images such that the filtered image is displayed in the departin g area according to the second embodiment of the present disclosure.

That is, the corresponding area of the original insert image stored i n the first image buffer 710 is displayed for an area included in the area of the or iginal target image among the whole area of the insert image, and the correspond ing area of the converted insert image stored in the second image buffer 730 is di splayed for an area departing from the area of the original target image among th e whole area of the insert image. In this way, when the insert image departs from the area of an editing target image, the user may clearly recognize that.

At this time, the method in which the insert image display processo r 750 differentiates and displays the images for areas may be variously realized, and as described above in the first embodiment, as the original insert image store d in the first image buffer 710, and the converted image stored in the second ima ge buffer 730 overlap each other, and each area is removed, the method may also be realized.

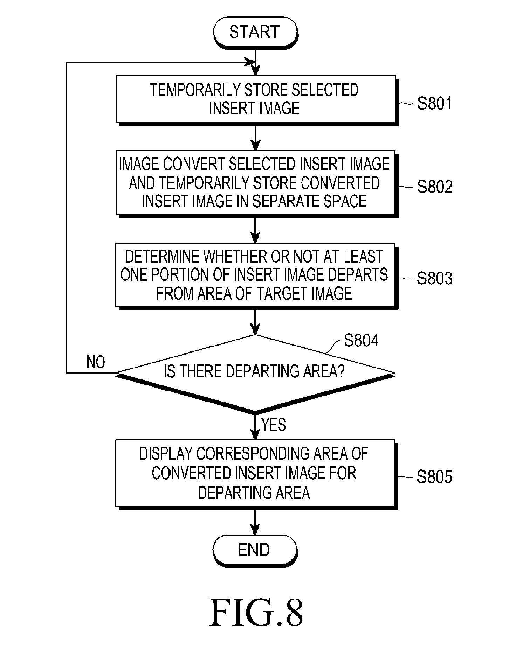

FIG. 8 is a flowchart showing a procedure of processing area select ion for media editing according to a second embodiment of the present disclosur e.

Referring to FIG. 8, first, during editing of an image in an image e diting program, when an insert image is selected and added to an original target i mage, the added insert image is temporarily stored in a memory, such as the first image buffer 710 at operation S801. Thereafter, the insert image currently being displayed is image converted to be stored in a separate space (e. g., the second i mage buffer 730) at operation S802.

At operation S803, a determination is made as to whether the insert image departs from the whole area of the editing target image through a location change of the insert image by the user, and when it is determined that at least on e area of the insert image departs from the whole area of the target image at oper ation S804, the corresponding area of the converted insert image is displayed for the departing area of the insert image at operation S805. In this way, when the i nsert image departs from the area of the editing target image, the user may clearl y recognize that.

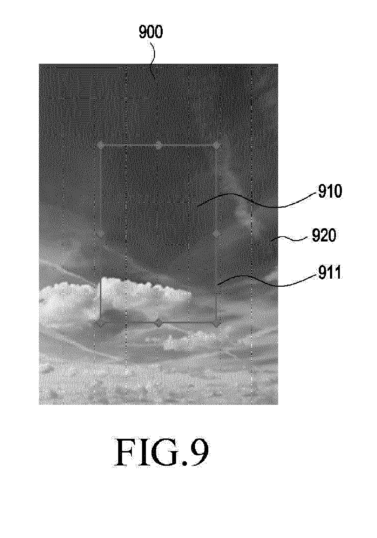

FIG. 9 shows an area selection result which is processed according to the first embodiment of the present disclosure.

Referring to FIG. 9, during editing of an image, when a user select s a specific area in an area selection mode, an original image is displayed as it is in a selected area 910 of the whole editing target image 900, and a converted (e. g., filtered) image is displayed in an unselected area 920. Accordingly, even whe n a boundary line 911 between the selected area 910 and the unselected area 920 is not clearly distinguished, the selected area 910 may be clearly differentiated.

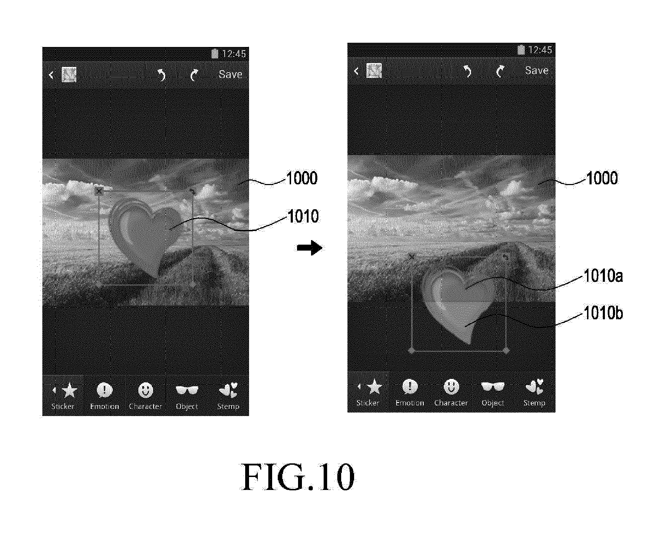

FIG. 10 shows an insert image display result which is processed ac cording to the second embodiment of the present disclosure.

Referring to FIG. 10, when an insert image 1010 is added to an ori ginal target image 1000 and is moved, the insert image 1010 may depart from th e whole area of the target image 1000 as shown on a right side of FIG. 10. At thi s time, according to the second embodiment of the present disclosure, as the corr esponding area of the original insert image is identically displayed in an area 101 0a, which does not depart from the target image 1000, among the whole area of t he insert image 1010, and the converted image (e. g., a filtered image) is display ed in an area 1010b which departs from the target image 1000, a determination c an be clearly made as to whether the insert image departs from the target image.

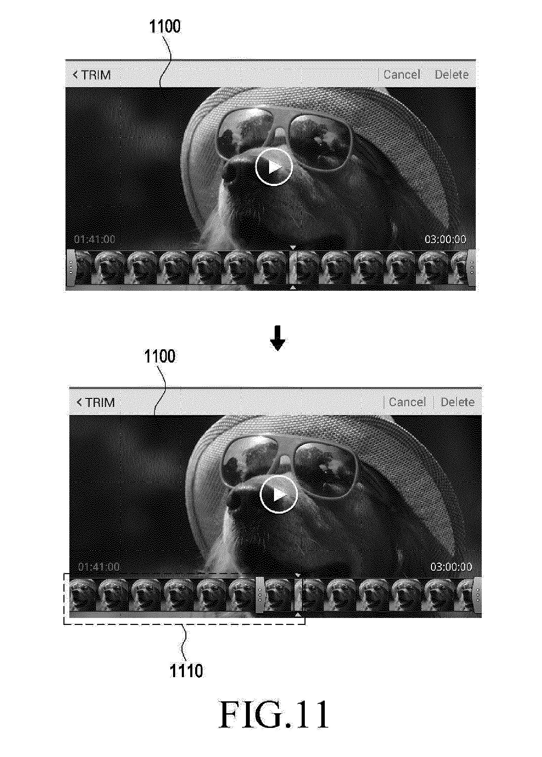

FIG. 11 shows a result where the present disclosure is applied to a moving image trim function.

Referring to FIG. 11, during editing of the moving image 1100, an area 1110 trimmed by a user's touch is selected and displayed through a filtered image (e. g., a gray filtered image) as in the above-described first embodiment of the present disclosure, whereby editing of the moving image can be easily achie ved.

As described above, according to the present disclosure, during edi ting of the media, when the specific area is selected in the state where the selecti on mode is entered, the unselected area is image filtered to be displayed, thereby being clearly differentiated from the selected area, which enables the user to eas ily achieve the image editing.

Further, according to the present disclosure, when the insert image is arranged in the target image, in the case where at least one area of the insert i mage departs from the target image, the corresponding area which departs from t he target image is image filtered to be displayed so that the determination can be clearly made as to whether the insert image departs from the target image, where by the user can easily perform the image editing.

That is, the selected area is visually differentiated from the unnece ssary area through filtering (e. g., gray filtering) for the unnecessary area (the un selected area, or the unedited area), whereby intuitiveness can be enhanced.

In addition, the present disclosure is widely applied to media editin g applications (e. g., a gallery, an image editor, a memo application, a video play er, and a video editor) as well as a wallpaper set-up, thereby enabling the editing applications to be easily used.

Information for performing an area selection processing for the me dia editing may be stored in a server computer readable medium. Such a medium as described above includes all types of recording medium in which programs a nd data are stored to be readable through computer systems. As an example of th e recording medium, a Read Only Memory (ROM), a Random Access Memory ( RAM), a Compact Disk (CD), a Digital Video Disk (DVD)-ROM, a magnetic ta pe, a floppy disk, and an optical data storage device are considered. Furthermore , the recording media may be distributed in computer systems connected as a net work, and computer readable codes may be stored and executed in a distributed mode in the recording media.

Although the present disclosure has been described using specific examples including detailed elements, limited embodiments, and the drawings, it is to be understood that they are provided merely to help in an overall comprehe nsion of the present disclosure, and the present disclosure is not limited to the ab ove-described various embodiments. It is obvious to those skilled in the art to w hich the present disclosure pertains that various changes and modifications can b e made from such descriptions as described above.

While the present disclosure has been shown and described with re ference to various embodiments thereof, it will be understood by those skilled in the art that various changes in form and details may be made therein without dep arting from the spirit and scope of the present disclosure as defined by the appen ded claims and their equivalents.

## Claims

1. An area selection processing apparatus for media editing which displays a selected area and an unselected area of an image, the area selection processing apparatus comprising:
a first image buffer configured to temporarily store a target image currently being displayed;
an image convertor configured to convert the target image through an image conversion method;
a second image buffer configured to temporarily store the target image converted through the image convertor;
an area selection determining unit configured to determine whether an area is selected for the target image; and
an area selection processor configured to process the target images such that the corresponding selected area of the target image stored in the first image buffer is displayed for the selected area, and the corresponding unselected area of the converted image stored in the second image buffer is displayed for the unselected area, when the area selection determining unit determines that the specific area is selected.

2. The area selection processing apparatus of claim 1, wherein the image convertor is configured to perform image filtering of the target image.

3. The area selection processing apparatus of claim 2, wherein the image filtering comprises any one selected from Blur, Embossing, Jitter, Sepia, Gray scale, and Invert.

4. The area selection processing apparatus of claim 1, wherein the area selection processing unit is configured to superpose the target image stored in the first image buffer on the converted target image stored in the second image buffer, and when the area selection determining unit determines that the specific area is selected, is configured to remove the unselected area among the whole area of the target image such that the corresponding area of the converted target image is displayed in the unselected area.

5. The area selection processing apparatus of claim 1, wherein the area selection processing unit is configured to superpose the converted target image stored in the second image buffer on the target image stored in the first image buffer, and when the area selection determining unit determines that the specific area is selected, is configured to remove an area corresponding to the selected area among the whole area of the converted target image such that the corresponding area of the converted target image is displayed in the unselected area.

6. An area selection processing method for media editing which displays a selected area and an unselected area of an image, the area selection processing method for media editing comprising:
temporarily storing a target image currently being displayed in a first image buffer;
converting the target image through an image conversion method;
temporarily storing the converted target image in a second image buffer;
determining whether an area is selected for the target image; and
processing the target images such that the corresponding selected area of the target image stored in the first image buffer is displayed for the selected area, and the corresponding unselected area of the converted image stored in the second image buffer is displayed for the unselected area, when it is determined that the specific area is selected.

7. The area selection processing method of claim 6, wherein the converting of the target image comprises image filtering of the target image.

8. The area selection processing method of claim 7, wherein the image filtering comprises any one selected from Blur, Embossing, Jitter, Sepia, Gray scale, and Invert.

9. The area selection processing method of claim 6, wherein the processing of the target images comprises:
superposing the target image stored in the first image buffer on the converted target image stored in the second image buffer; and
when it is determined that the specific area is selected, removing the unselected area among the whole area of the target image such that the corresponding area of the converted target image is displayed in the unselected area.

10. The area selection processing method of claim 6, wherein the processing of the target images comprises:
superposing the converted target image stored in the second image buffer on the target image stored in the first image buffer; and
when it is determined that the specific area is selected, removing an area corresponding to the selected area among the whole area of the converted target image such that the corresponding area of the converted target image is displayed in the unselected area.

11. A computer program comprising instructions arranged, when executed, to implement a method as claimed in any preceding claim and/or an apparatus as claimed in any preceding claim.

12. A machine-readable storage storing a program to implement a method as claimed in claim 6.
